# EUROPÄISCHE PATENTSCHRIFT

(11) **EP 4 304 900 B1**
(45) Veröffentlichungstag und Bekanntmachung des Hinweises auf die Patenterteilung: **19.11.2025**
(21) Anmeldenummer: 22713337.8
(22) Anmeldetag: 02.03.2022
(51) Int. Cl.: B60R 16/00, H01R 4/02, F16B 33/00, F16B 35/00, H01R 11/26, H01R 43/02, H01R 4/32, H01R 4/30

(54) **ELEKTRISCHE VERBINDUNG**
ELECTRIC CONNECTION
CONNEXION ÉLECTRIQUE

(30) Priorität: 10.03.2021 DE 102021105747
(43) Veröffentlichungstag der Anmeldung: 17.01.2024
(73) Patentinhaber: Auto-Kabel Management GmbH, 79688 Hausen i.W. (DE)
(72) Erfinder: KASZUBOWSKI, Franz-Heinz, 41849 Wassenberg (DE); ATTARZADEH, Amir Hossein, 41179 Mönchengladbach (DE)
(74) Vertreter: Cohausz & Florack
(86) Internationale Anmeldenummer: PCT/EP2022/055283
(87) Internationale Veröffentlichungsnummer: WO 2022/189229

(56) Entgegenhaltungen:
- WO-A2-2009/098412
- DE-U1- 202018 100 111

## Beschreibung

Der Gegenstand betrifft eine elektrische Verbindung, insbesondere eine Verbindung zwischen einem Anschlussteil und einem Flachteil.

In der elektrischen Verbindungstechnik, insbesondere in automotiven Anwendungen, ist es üblich, lösbare Verbindungen zwischen zwei elektrischen Leitern über einen an einem der Leiter angeordneten Bolzen zu realisieren. Ein Bolzen ist dabei auf einer ebenen Oberfläche eines der Leiter angeordnet und dient zum Verschrauben mit dem anderen Leiter. Die Anordnung eines Bolzens an einem Leiter kann einerseits als Durchsteckbolzen durch eine Bohrung in dem Leiter oder als Schweißbolzen erfolgen. Ein Schweißbolzen wird dabei auf einer flachen Oberfläche eines Leiters, beispielsweise mittels Reibschweißen, insbesondere Rotationsreibschweißen, verschweißt. Anschließend kann der zweite Leiter auf den verschweißten Bolzen aufgesteckt und mit dem ersten Leiter über eine an dem Bolzen angeschraubte Mutter verschraubt werden. Die Leiter werden über die Anpresskraft der Mutter gegeneinander gepresst und ein elektrisch leitender Pfad zwischen den Leitern bildet sich primär über ihre unmittelbare Kontaktfläche als auch über den Bolzen.

Der Leiter, auf den der Bolzen aufgeschweißt ist, ist in der Regel ein Flachteil, insbesondere ein Flachleiter oder ein elektrisches Anbauteil mit einer flachen Oberfläche. Im Bereich der Energieleitungen werden in der Regel Kupferleiter eingesetzt. Aluminium Leiter sind ebenfalls möglich. Um am Übergang zwischen dem Leiter und dem Bolzen Kontaktkorrosion zu vermeiden und so eine langlebige stabile Verbindung zu gewährleisten, wird der Bolzen in der Regel aus dem gleichen Material gefertigt, wie der Leiter. Bei Alu Verbindungen sollten die Verbindung gegenüber Umwelteinflüssen geschützt werden, so dass sie gegenüber Kontaktkorrosion geschützt sind. Dies ist in der Regel Kupfer, so dass sowohl Bolzen als auch Leiter aus Kupfer oder einer Kupferlegierung gebildet sein sollten.

Zwar hat Kupfer eine sehr gute elektrische und thermische Leitfähigkeit, was für die Verbindung an sich vorteilhaft ist, jedoch ist Kupfer relativ duktil. Das bedeutet, dass beim Verschrauben des zweiten Leiters über den Bolzen mit dem ersten Leiter das Anzugmoment der Mutter nicht zu groß werden darf. Ist ein hohes Anzugmoment gefordert, besteht stets die Gefahr, dass sich das Gewinde des Bolzens abschert. Auch bei dynamischen Belastungen im Dauerbetrieb können derartige Scherkräfte an dem Gewinde auftreten, dass dieses abschert. Dies ist insbesondere bei der Verwendung von Kupfer problematisch. Auf der anderen Seite wird bei der Verwendung eines Bolzens aus Stahl, insbesondere aus Edelstahl, eine sehr gute mechanische Stabilität einer Schraubverbindung realisiert. Diese erhöhte mechanische Stabilität gegenüber einem Bolzen aus Kupfer wird aber durch eine reduzierte elektrische Leitfähigkeit über den Bolzen "erkauft". Der Bolzen stellt einen relevanten Übergangswiderstand an der Verbindungsstelle der über den Bolzen miteinander verbundenen Leiter dar.

Die Veröffentlichung WO 2009/098412 A1 zeigt eine Anordnung mit einer Batterie und einem Leiter, die durch einen Stift verbunden sind, der insbesondere eine Trennwand durchdringt.

Ausgehend von diesem Stand der Technik lag dem Gegenstand somit die Aufgabe zugrunde, eine elektrische Verbindung zur Verfügung zu stellen, welche bei gleichbleibender elektrischer Güte erhöhte mechanische Anforderung erfüllt.

Diese Aufgabe wird durch eine Verbindung nach Anspruch 1 gelöst.

Die Verbindung umfasst zumindest ein Anschlussteil. Ein solches Anschlussteil kann als Band oder Blech geformt sein. Das Anschlussteil ist dabei insbesondere ein Flachleiter oder ein flacher Bereich eines Rundleiters. Beispielsweise kann ein Rundleiter an einer Stirnseite oder in seinem Verlauf abgeflacht sein. Die Abflachung kann beispielsweise durch Schmieden, Stauchen oder dergleichen eingebracht sein.

Auch ist es möglich, dass das Anschlussteil nicht aus einem Vollmaterial, insbesondere einer einzigen Litze eines Leiters gebildet ist, sondern auch aus einem Geflecht oder Gewebe oder einem Multilitzenleiter. Hierbei kann in das Geflecht, Gewebe oder die Litzen durch entsprechende Umformungsverfahren wie Stauchen, Pressen, Schweißen oder dergleichen ein flacher Bereich geformt werden. An einem Gewebeband kann durch beispielsweise Schweißen und/oder Kompaktieren ein im Wesentlichen einschlussfreier Bereich geformt werden, der sich wie ein Vollmaterial bearbeiten lässt, insbesondere auf dem eine Hülse aufgebracht werden kann.

Für eine elektrische Verbindung des Anschlussteils mit einem weiteren Anschlussteil, beispielsweise einem Leiter oder dergleichen, wird nun vorgeschlagen, dass eine elektrisch leitfähige, insbesondere metallische Hülse vorgesehen ist. Die Hülse ist mit dem Anschlussteil stoffschlüssig verbunden. Die Hülse hat eine in ihrer Längsrichtung verlaufende Durchgangsöffnung. Die Hülse wird mit dem Anschlussteil insbesondere derart verbunden, dass die Längsrichtung der Hülse quer zur Längsrichtung des Anschlussteils verläuft. Insbesondere verläuft die Längsrichtung der Hülse parallel zur Flächennormalen der Fläche des Anschlussteils, auf welcher die Hülse aufgebracht wird.

Für eine mechanische Verbindung zwischen dem Anschlussteil und dem weiteren Anschlussteil, beispielsweise einem Leiter, ist neben der Hülse ein Bolzen vorgesehen. Der Bolzen ist mit der Hülse verbunden. Der Bolzen weist einen Bolzenschaft auf. Der Bolzenschaft ist ebenfalls hülsenförmig und hat zumindest ein Sackloch, bevorzugt ein Durchgangsloch. Dieses Loch erstreckt sich bevorzugt ausgehend von der dem Bolzenflansch abgewandten Stirnseite in den Bolzen hinein. Bevorzugt erstreckt sich das Loch als Durchgangsloch zwischen den distalen stirnseitigen Enden des Bolzens. In der Längserstreckung des Bolzens hat dieser einen radial nach außen weisenden Flansch und den sich daran anschließenden Bolzenschaft. Der Bolzenflansch kann auch als Teil des Bolzenschafts verstanden werden.

Gemäß einer Alternative hat der Bolzen einen Bolzenschaft und einen Bolzenkopf auf.

Nachfolgend wird der Bolzen in zwei alternativen Ausgestaltungen beschrieben. Bei der ersten Ausgestaltung ist der Bolzen hülsenförmig mit einer durchgehenden Öffnung und einem Bolzenflansch. Der Bolzenschaft ist somit hohl.

Bei einer zweiten Ausgestaltung hat der Bolzen einen Bolzenschaft und einen Bolzenkopf. Der Schaft und/oder der Kopf sind aus Vollmaterial ohne Öffnung.

Die nachfolgenden Ausführungen zum Bolzen können, soweit möglich, für beide Alternativen gelten. Insbesondere können nachfolgenden Ausführungen zum Bolzenkopf, soweit möglich, für den Bolzenflansch gelten. Insbesondere die Befestigung des Bolzens in der Hülse kann für beide Alternativen gleich sein.

Während die Hülse stoffschlüssig mit dem Anschlussteil verbunden ist, kann der Bolzen formschlüssig, kraftschlüssig und/oder stoffschlüssig mit der Hülse verbunden sein. Insbesondere liegt die äußere Mantelfläche des Bolzenschaftes in unmittelbarem Kontakt an der inneren Mantelfläche der Durchgangsöffnung an. Hierbei ist es möglich, dass beim Einschieben des Bolzens in die Durchgangsöffnung ein Kraft-/oder Formschluss gebildet wird. Insbesondere kann der Bolzen auch derart in die Durchgangsöffnung getrieben werden, dass sich der Querschnitt der Durchgangsöffnung durch das Eintreiben des Bolzens gegenüber seinem Ursprungszustand verändert. Der Bolzen verformt dabei die innere Mantelfläche der Durchgangsöffnung plastisch. Dies ist insbesondere dann möglich, wenn der Bolzen aus einem mechanisch festeren Material hergestellt ist als die Hülse.

Die Hülse hat an ihrem einen stirnseitigen Ende ein Rücksprung, welcher zur Aufnahme des Bolzenflansches/-kopfes gebildet ist. Wenn der Bolzen in die Hülse eingeschoben ist, d.h. mit seinem Bolzenschaft in der Durchgangsöffnung eingeschoben ist, liegt der Bolzenflansch/Bolzenkopf im Rücksprung an dem stirnseitigen Ende. Der Rücksprung hat eine Erstreckung in Längsrichtung in die Hülse hinein, welche bevorzugt größer ist, als die Erstreckung des Bolzenflansches Bolzenkopfes in Längsrichtung des Bolzens.

Somit wird der Bolzenflansch/Bolzenkopf vollständig in dem Rücksprung aufgenommen.

Die Hülse ist anschließend mit ihrer an dem stirnseitigen Ende liegenden Stirnfläche stoffschlüssig mit dem Anschlussteil verbunden. Durch den Rücksprung wird der Bolzen vollständig in der Hülse aufgenommen und die an dem stirnseitigen Ende liegende Stirnfläche kann plan sein. Die durch diese Stirnfläche gebildete Ebene dient als Anschlussebene zur stoffschlüssigen Verbindung mit dem Anschlussteil.

Der so in der Hülse aufgenommene Bolzen dient zur Kraftaufnahme einer Anzugskraft beim Verklemmen des zweiten Anschlussteils zwischen der dem Rücksprung gegenüberliegenden Stirnseite der Hülse und einer mit dem Bolzen verschraubten Schraube oder einer an dem Bolzen angeschraubten Mutter. Ein elektrischer Pfad zwischen den dann verschraubten Anschlussteilen erfolgt primär von dem gegenständlichen Anschlussteil über die Hülse auf das mit der Hülse verklemmte zweite Anschlussteil. Das zweite Anschlussteil kann entsprechend der obigen Ausführungen zum ersten Anschlussteil gebildet sein, wobei in der Abflachung oder in dem flachen Bereich eine Durchgangsöffnung vorgesehen ist, in die der Bolzen mit seinem Bolzenschaft eingesteckt werden kann.

Der Bolzen zusammen mit der Hülse bildet somit ein Befestigungsmittel für ein zweites Anschlussteil an dem ersten Anschlussteil.

Gemäß einem Ausführungsbeispiel wird vorgeschlagen, dass der Bolzen mit seinem kragenförmig, radial nach außen auskragenden Bolzenflansch / Bolzenkopf zumindest teilweise umlaufend an einer umlaufenden Schulter in dem Rücksprung der Hülse gelagert ist. Die Schulter ist in der Art eines Falzes im Rücksprung der Hülse gebildet. Der Bolzenflansch / Bolzenkopf ragt radial zur Längsrichtung des Bolzens nach außen, insbesondere umlaufend. Der Querschnitt des Bolzenflansch / Bolzenkopfes ist bevorzugt rund, kann aber auch mehreckig, insbesondere sechs- oder achteckig sein. Der Querschnitt des Rücksprungs kann an den Querschnitt des Bolzenflansches Bolzenkopfes angepasst sein. Insbesondere bei einem mehreckigen Bolzenflansch / Bolzenkopf kann hierdurch der Bolzen in der Hülse gegenüber einem um die Längsachse laufenden Drehmoment gesichert sein. Hierdurch kann ein Verschrauben eines Anschlussteils mit der Hülse über den Bolzen vereinfacht sein.

Der an dem stirnseitigen Ende der Hülse angeordnete Rücksprung umschließt die Durchgangsöffnung bevorzugt vollständig. Somit kann der Bolzenflansch /Bolzenkopf vollständig in den Rücksprung eingesteckt werden und der Bolzenflansch / Bolzenkopf ragt nicht mehr über das stirnseitige Ende der Hülse hinaus.

Gemäß einem Ausführungsbeispiel wird vorgeschlagen, dass das Loch ein Sackloch oder ein Durchgangsloch ist. Das Loch des Bolzenschafts weist bevorzugt ein Innengewinde auf. Der Bolzenschaft wird mit seiner äußeren Mantelfläche in der Hülse verpresst. Über das Innengewinde kann in den Bolzenschaft eine Schraube eingeschraubt werden. Mit dieser Schraube kann eines zweiten Anschlussteils an der Hülse und mithin dem ersten Anschlussteil verpresst werden.

Gemäß einem Ausführungsbeispiel wird vorgeschlagen, dass der Bolzenschaft mit seinem Schaftende an einem zum Rücksprung distalen Ende der Hülse aus der Durchgangsöffnung heraus ragt. Dieses herausragende Ende dient zur Befestigung eines zweiten Anschlussteils an der Hülse und mithin dem ersten Anschlussteil.

Der Bolzenschaft kann einen einheitlichen Querschnitt über seine Längsachse haben oder unterschiedliche Querschnitte. So ist es möglich, dass der Bolzenschaft in dem Bereich, in dem er in die Durchgangsöffnung eingesteckt ist, Bereiche mit unterschiedlichen radialen Auskragungen aufweist. Die Durchgangsöffnung kann hierzu korrespondierend sein und insbesondere einen korrespondierenden Öffnungsquerschnitt haben. Somit kann der Bolzenschaft im Bereich der Durchgangsöffnung formschlüssig aufgenommen sein.

Gemäß einem Ausführungsbeispiel wird vorgeschlagen, dass der Bolzen in seinem Loch ein Innengewinde aufweist. Mit diesem Innengewinde kann der Bolzen mit einer Schraube verschraubt werden. Ein zweites Anschlussteil kann mit dem Schraubenkopf einer so verschraubten Schraube gegen die Hülse und den Bolzen gepresst werden. Der Bolzen hat dabei eine Längserstreckung derart, dass er im eingesteckten Zustand, also wenn der Bolzenschaft im Rücksprung an der Hülse anliegt, nicht über die Durchgangsöffnung der Hülse hinaus ragt. Insbesondere liegen die Stirnflächen von Hülse und Bolzenschaft auf der dem Rücksprung abgewandten Seite planparallel zueinander.

Gemäß einem Ausführungsbeispiel wird vorgeschlagen, dass ein Schaftende des Bolzens ein Gewinde aufweist, insbesondere dass das Gewinde bis in die Durchgangsöffnung hinein ragt. Über dieses Gewinde kann der Bolzen mit einem zweiten Anschlussteil verschraubt werden. Insbesondere kann mittels einer Mutter das zweite Anschlussteil gegen die Stirnseite der Hülse gepresst werden.

Wie bereits erwähnt, kann der Bolzenschaft formschlüssig in der Durchgangsöffnung aufgenommen werden. Hierzu ist der Bolzen gemäß einem Ausführungsbeispiel an seiner äußeren Mantelfläche, insbesondere in einem am Bolzenflansch angrenzenden Bereich zumindest abschnittsweise gerändelt. Der gerändelte Teil hat in Längsrichtung des Bolzenschafts verlaufende Vor- und Rücksprünge. Der gerändelte Teil des Bolzenschaftes ist bevorzugt mittels Presspassung in die Durchgangsöffnung eingepresst. Dabei kann ein plastisches Verformen der inneren Mantelfläche der Durchgangsöffnung erfolgen.

Wie bereits erläutert, ist es bevorzugt, wenn der Bolzen in der Hülse verdrehsicher gelagert ist. Dies kann insbesondere durch das Einpressen des Bolzenschaftes in die Durchgangsöffnung erfolgen.

Gemäß einem Ausführungsbeispiel wird vorgeschlagen, dass der Bolzenflansch / Bolzenkopf in Längsrichtung mit einem Abstand zu der Stirnfläche in dem Rücksprung angeordnet ist. Hierdurch wird erreicht, dass einerseits die Stirnfläche plan mit dem Anschlussteil verschweißt werden kann und andererseits im verschweißten Zustand der Bolzenkopf nicht im unmittelbaren Kontakt mit dem Anschlussteil ist.

Die Hülse ist insbesondere aus einem Kupferwerkstoff gebildet und der Bolzen aus Stahlwerkstoff. Vorzugsweise ist die Hülse aus einem Werkstoff gebildet, der duktiler ist, als der Werkstoff des Bolzens. Die Kombination Kupfer und Stahl hat sich hierbei als vorteilhaft herausgestellt. Dadurch, dass der Bolzen weniger duktil ist als die Hülse, bietet er an seinem Gewinde auch einen höheren Widerstand gegenüber Abscheren des Gewindes beim Verschrauben, als wenn der Bolzen aus dem Werkstoff der Hülse geformt wäre. Der Bolzen kann somit mit einem höheren Anzugmoment verschraubt werden, insbesondere kann eine auf dem Gewinde des Bolzens aufgeschraubte Mutter oder eine mit dem Innengewinde verschraubte Schraube mit einem höheren Anzugsmoment angezogen werden, als wenn der Bolzen aus dem Material der Hülse geformt wäre.

Gemäß einem Ausführungsbeispiel wird vorgeschlagen, dass die Hülse mit der an dem stirnseitigen Ende liegenden Stirnfläche mit dem Anschlussteil reibverschweißt, insbesondere vollständig reibverschweißt ist. Hierbei kann insbesondere ein Rotationsreibschweißen verwendet werden. Die Hülse kann bevorzugt einen Bereich mit unterschiedlichen radialen Ausdehnungen aufweisen. Insbesondere kann der Außenquerschnitt mehreckig sein, so dass ein Reibschweißwerkzeug mit einem hohen Drehmoment ein Reibverschweißen ermöglicht. Die Hülse muss dabei nicht in dem Reibschweißwerkzeug mittels radial nach innen weisenden Anpresskräften gehalten werden, sondern vielmehr kann die Energie auf die äußere Mantelfläche der Hülse über den Formschluss zwischen Hülse und Reibschweißwerkzeug eingebracht werden.

Gemäß einem Ausführungsbeispiel wird vorgeschlagen, dass ein Verbindungsteil mit einer Öffnung über den Bolzenschaft gelegt ist. Das Verbindungsteil ist zuvor auch als zweites Anschlussteil beschrieben worden. Das Verbindungsteil kann entsprechend der obigen Beschreibung des ersten Anschlussteils gebildet sein. Insbesondere hat das Verbindungsteil einen flachen Bereich oder eine Abflachung mit der Öffnung.

Das Verbindungsteil kann in einer Alternative mit seiner Öffnung über dem Loch des Bolzenschaftes, insbesondere fluchtend angeordnet werden. Anschließend kann eine Schraube durch die Öffnung des Verbindungsteils gesteckt und mit dem Innengewinde verschraubt werden. Der Kopf der Schraube wird somit gegen das Verbindungsteil auf der der Hülse abgewandten Oberfläche gedrückt. Der Schraubenkopf verklemmt das Verbindungsteil an der Hülse.

Mit einer an dem Bolzenschaft gelagerten Mutter kann das Verbindungsteil in einer Alternative an der Hülse verklemmt werden. Hierbei kann die Mutter mit einem Anzugsmoment an dem Bolzenschaft angeschraubt werden. Über die Mutter wird das Verbindungsteil mit der Hülse verklemmt. Das Verbindungsteil ist mit dem zum Rücksprung distalen Ende der Hülse in unmittelbarem Kontakt.

Ein elektrischer Pfad zwischen Anschlussteil und Verbindungsteil wird in beiden Alternativen primär unmittelbar über die Hülse gewährleistet.

Gemäß einem Ausführungsbeispiel wird vorgeschlagen, dass das Anschlussteil, die Hülse und der Bolzen sowie das Verbindungsteil in einem gemeinsamen Gehäuse gekapselt sind, wobei das Anschlussteil und das Verbindungsteil feuchtigkeitsdicht aus dem Gehäuse herausgeführt sind.

Nachfolgend wird der Gegenstand anhand einer Ausführungsbeispiele zeigenden Zeichnung näher erläutert. In der Zeichnung zeigen:
- Fig. 1a-d: verschiedene Anschlussteile gemäß Ausführungsbeispielen;
- Fig. 2a, b: Ansichten von Hülsen gemäß Ausführungsbeispielen;
- Fig. 3a-c: Draufsichten auf stirnseitige Hülsen mit Rücksprüngen gemäß Ausführungsbeispielen;
- Fig. 4: eine Ansicht eines Bolzens gemäß einem nicht beanspruchten Ausführungsbeispiel;
- Fig. 5a, b: Draufsichten auf Bolzenköpfe gemäß nicht beanspruchten Ausführungsbeispielen;
- Fig. 6a-c: Querschnitte von Bolzenschäften gemäß nicht beanspruchten Ausführungsbeispielen;
- Fig. 7a-c: die Herstellung einer Verbindung gemäß nicht beanspruchten einem Ausführungsbeispiel.
- Fig. 8: eine Ansicht eines Bolzens gemäß einem Ausführungsbeispiel;
- Fig. 9a, b: Draufsichten auf Bolzenköpfe gemäß Ausführungsbeispielen;
- Fig. 10a-c: Querschnitte von Bolzenschäften gemäß Ausführungsbeispielen;
- Fig. 11a-c: die Herstellung einer Verbindung gemäß einem Ausführungsbeispiel.

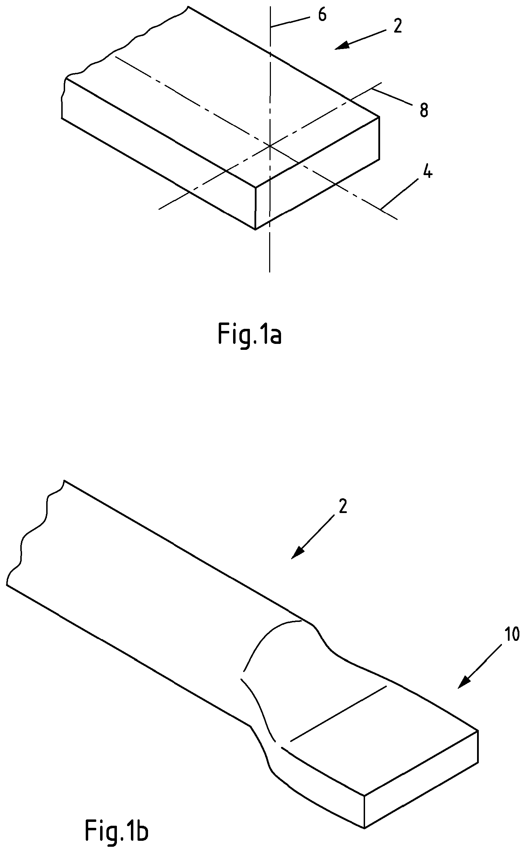

Fig. 1a zeigt ein erstes Anschlussteil gemäß einem Ausführungsbeispiel. Das Anschlussteil 2 ist im gezeigten Beispiel ein Flachleiter. Das Anschlussteil in allen hier vorgestellten Varianten kann aus einem Kupferwerkstoff oder einem Aluminiumwerkstoff gebildet sein.

Das Anschlussteil 2 hat eine Längsachse 4, eine Hochachse 6 sowie eine Querachse 8. Das Anschlussteil 2 kann eine oder mehrere flache Anschlussflächen aufweisen, die insbesondere parallel zu einer durch zwei der Achsen 4-8 aufgespannten Ebene verläuft.

Das Anschlussteil 2 gemäß der Fig. 1b kann als Rundleiter geformt sein. An einem stirnseitigen Ende oder im Verlaufe des Leiters kann ein Anschlussbereich 10 vorgesehen sein. Der Anschlussbereich 10 kann als Abflachung gebildet sein. Insbesondere ist der Anschlussbereich 10 durch Stauchen oder Pressen aus dem Rundleiter geformt.

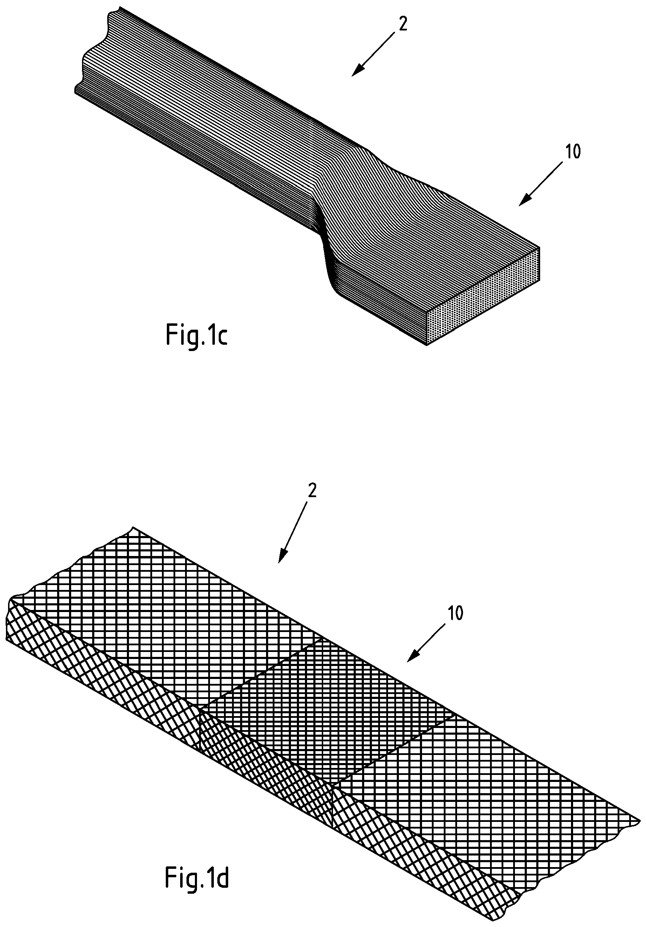

Fig. 1c zeigt ein Anschlussteil 2 als Litzenleiter, wobei auch hier ein Anschlussbereich 10 stirnseitigen Ende geformt ist. Die Litzen können im Anschlussbereich 10 kompaktiert und insbesondere miteinander verschweißt oder verlötet sein.

Fig. 1d zeigt ein Anschlussteil 2 als Geflechtband. Der Anschlussbereich 10 kann im Verlauf des Geflechtsbands oder an einem stirnseitigen Ende geformt sein. Die Litzen des Geflechts können im Anschlussbereich 10 miteinander gefügt, insbesondere untereinander stoffschlüssig verbunden sein, beispielsweise mittels Ultraschallverschweißen oder Widerstandsschweißen. Die zu den Ausführungsbeispielen gemäß Fig. 1a-d beschriebenen Ausgestaltungen können beliebig für verschiedene Anschlussteile 2 kombiniert werden.

Zur Verbindung eines Anschlussteils 2 mit einem Verbindungsteil wird nunmehr eine Hülse vorgeschlagen.

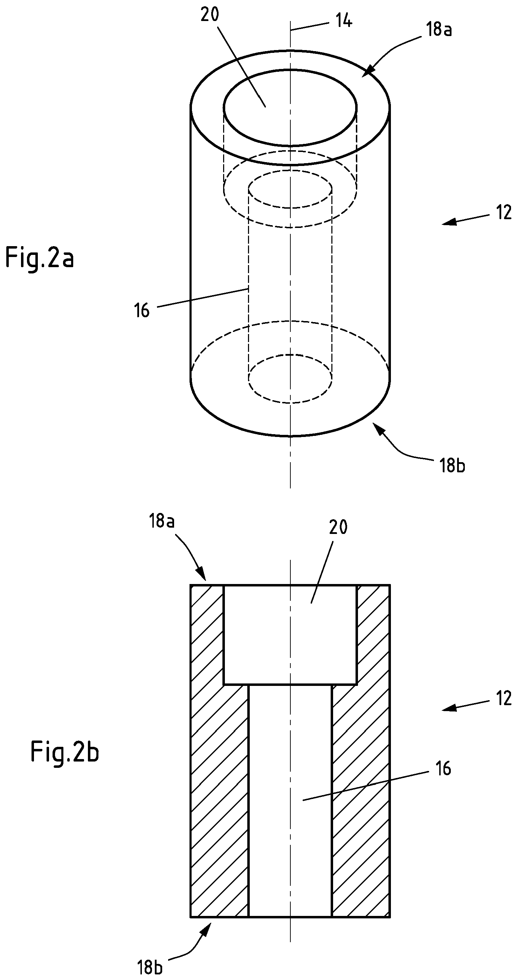

Fig. 2a zeigt eine Hülse 12. Die Hülse 12 hat eine Längsachse 14. Die Hülse 12 hat eine Durchgangsöffnung 16. Die Durchgangsöffnung 16 erstreckt sich von einem ersten stirnseitigen Ende 18a hin zu einem zweiten stirnseitigen Ende 18b. Die Längsachse 14 erstreckt sich zwischen den beiden stirnseitigen Enden 18a, b. Im Bereich eines stirnseitigen Endes 18a hat die Hülse 12 einen Rücksprung 20. Der Rücksprung 20 ist bevorzugt umlaufend umrandet von der äußeren Mantelfläche der Hülse 12. Im Bereich des Rücksprungs 20, insbesondere zentrisch im Rücksprung 20 ist die Durchgangsöffnung 16 vorgesehen.

Fig. 2b zeigt die Hülse 12 in einem Längsschnitt. Der Rücksprung 20 ist zu erkennen. Auch ist zu erkennen, dass die Hülse 12 den Rücksprung 20 umlaufend einfasst. Die Durchgangsöffnung 16 verläuft vom Rücksprung 20 hin zu dem stirnseitigen Ende 18b.

Die Hülse 12 ist bevorzugt aus einem Kupferwerkstoff oder Aluminiumwerkstoff. Insbesondere ist Hülse 12 aus dem gleichen Werkstoff, wie das Anschlussteil 2. Werkstoffe können insbesondere Legierungen sein, so wie beispielsweise Messing als Kupferlegierung.

Die äußere Mantelfläche als auch der Querschnitt des Rücksprungs 20 sowie der Durchgangsöffnung 16 kann rund oder eckig, insbesondere kreisrund, elliptisch oder mehreckig geformt sein.

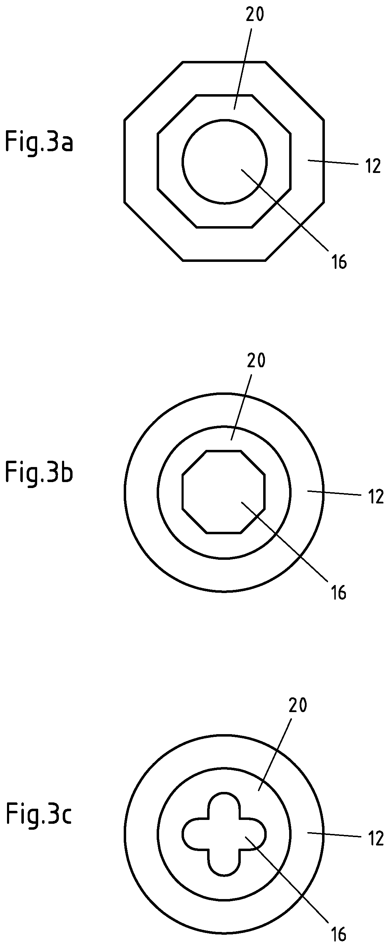

Die Fig. 3a-c zeigen verschiedene Ausführungsbeispiele der Hülse in einer Draufsicht. In der Fig. 3a ist die äußere Mantelfläche der Hülse 12 achteckig. Der Rücksprung 20 ist in seinem Querschnitt hieran angepasst und ebenfalls achteckig. Innerhalb des Rücksprungs 20 ist die Durchgangsöffnung 16 mit einem runden Querschnitt angeordnet.

Fig. 3b zeigt ein weiteres Ausführungsbeispiel, bei dem die äußere Mantelfläche der Hülse 12 als auch der Rücksprung 20 rund, insbesondere kreisrund sind. Die Durchgangsöffnung 16 innerhalb des Rücksprungs 20 ist hingegen sechseckig geformt.

Fig. 3c zeigt im Gegensatz zur Fig. 3b die Durchgangsöffnung 16 mit einem sternförmigen Querschnitt. Die unterschiedlichsten Formen sind miteinander kombinierbar.

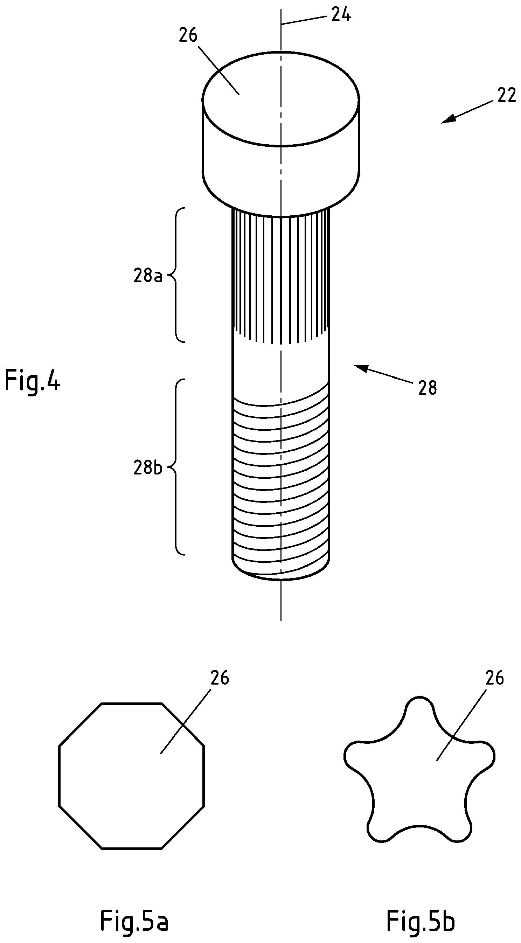

Fig. 4 zeigt einen Bolzen 22. Der Bolzen 22 hat eine Längsachse 24. Der Bolzen 22 hat einen Bolzenkopf 26 sowie einen Bolzenschaft 28. Der Bolzenschaft 28 erstreckt sich entlang der Längsachse 24. Der Bolzenschaft 28 kann einen ersten Bereich 28a und einen zweiten Bereich 28b aufweisen. Der erste Bereich 28a wird vorzugsweise in die Durchgangsöffnung 16 eingeschoben und der zweite Bereich 28b ragt über das stirnseitige Ende 18b hinaus. Im Bereich 28a kann der Bolzenschaft 28 in Richtung der Längsachse 24 gerändelt sein, wohingegen der Bereich 28b der Bolzenschaft 28 ein Gewinde aufweisen kann.

Der Bolzenkopf 26 kann in seinem Querschnitt, wie er in den Fig. 5a und b dargestellt ist, einem Querschnitt des Rücksprungs 20 angepasst sein. So zeigt Fig. 5a einen Bolzenkopf 26 mit einem achteckigen Querschnitt, wohingegen Fig. 5b einen Bolzenkopf 26 mit einem sternförmigen Querschnitt zeigt. Diese und andere Querschnitte sind denkbar. Die Querschnitte von Bolzenkopf 26 und Rücksprung 20 können kongruent zueinander sein, so dass der Bolzenkopf 26 formschlüssig im Rücksprung 20 aufgenommen werden kann. Dieser Formschluss führt zu einer Verdrehsicherung des Bolzens 22 in der Durchgangsöffnung 16, so dass der Bolzen 22 an der Hülse 12 über das Gewinde im Bereich 28b verschraubt werden kann.

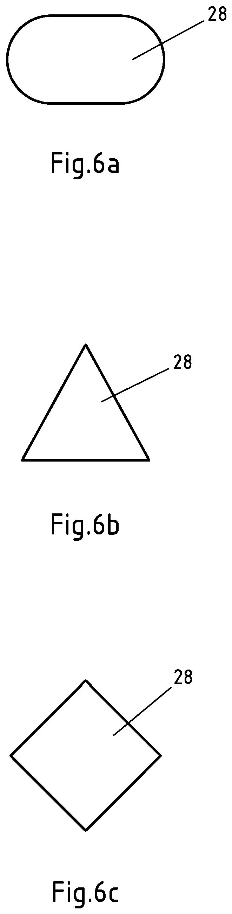

Neben verschiedenen Querschnitten des Bolzenkopfes gemäß den Fig. 5a, b kann auch der Bolzenschaft 28, insbesondere im Bereich 28a ein Querschnitt aufweisen, der nicht kreisrund ist. So zeigt Fig. 6a einen Bolzenschaft 28 im Bereich 28a, der oval ist. Fig. 6b zeigt einen Bolzenschaft 28 in einem Querschnitt im Bereich 28a, der dreieckig ist und Fig. 6c zeigt einen entsprechenden viereckigen Querschnitt.

Die Durchgangsöffnung 16 als auch der Querschnitt des Bolzenschaftes 22 im Bereich 28a kann kongruent zueinander sein. Auch ist es möglich, dass die Rändelung im Bereich 28a so ist, dass ihr maximaler Durchmesser etwas größer ist, als der Durchmesser der Durchgangsöffnung 16, so dass wenn der Bolzen 22 in die Durchgangsöffnung 16 geschoben wird, eine Presspassung zwischen dem Bolzen 26 im Bereich 28a und der Durchgangsöffnung 16 gebildet wird. Hierbei kann die Rändelung zu einer plastischen Verformung der inneren Mantelfläche der Durchgangsöffnung 16 führen.

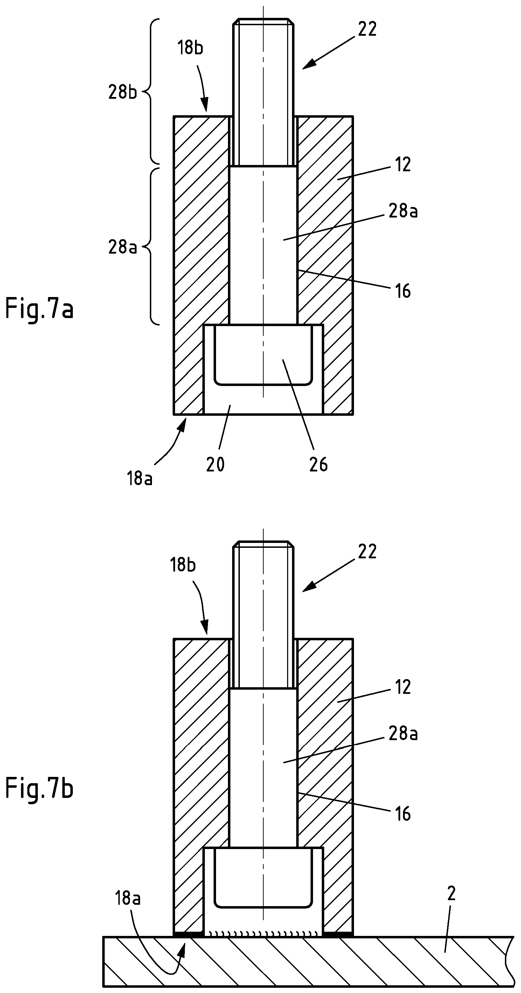

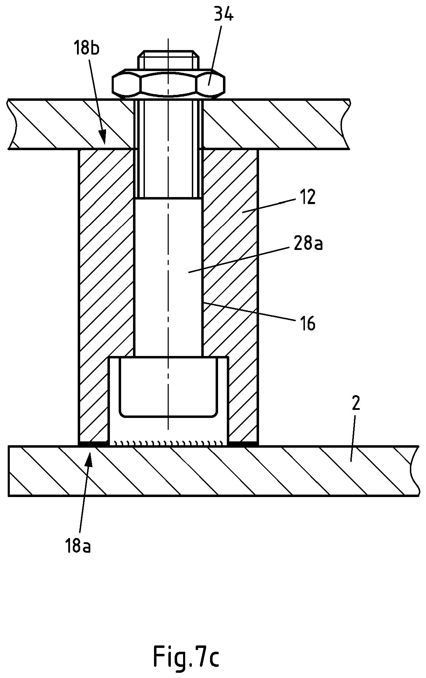

Die Fig. 7a-c zeigen das Herstellen einer gegenständlichen Verbindung. Zunächst (Fig. 7a) wird der Bolzen 22 in die Hülse 12 eingeschoben, so dass der Bolzenkopf 26 im Rücksprung 20 versenkt wird. Der Bolzenschaft 28 ist mit seinem Bereich 28a innerhalb der Durchgangsöffnung 16, wohingegen der Bolzenschaft 28 in seinem Bereich 28b aus dem stirnseitigen Ende 18b der Hülse 12 hinausragt.

Nachdem der Bolzen 22 in die Durchgangsöffnung 16 eingeschoben wurde , wird die Hülse 12 mit dem Anschlussteil 2 im Bereich des stirnseitigen Endes 18a stoffschlüssig verbunden, insbesondere verschweißt (Fig 7b). Hierbei kann ein Schweißwerkzeug die Hülse 12 mittels Reibschweißen gegen den Anschlussbereich 10 pressen und durch die eingebrachte Rotationsenergie ein Aufschmelzen der Fügepartner bewirken. Auch kann ein Widerstandsschweißen erfolgen.

Nachdem die Hülse 12 auf dem Anschlussteil 2 verschweißt wurde, kann ein Verbindungsteil 30, welches entsprechend einem hier beschriebenen Anschlussteil oder formabweichend hiervon geformt sein kann, an dem Bolzen 22 befestigt, insbesondere verschraubt werden. Das Verbindungsteil 30 ist insbesondere ein Kabel, insbesondere wie es in den Fig. 1a-d beschrieben ist.

Das Verbindungsteil 30 hat eine Durchgangsöffnung 32. Mit der Durchgangsöffnung 32 wird das Verbindungsteil 30 auf den Bolzen 22, insbesondere den Bolzenschaft 28 im Bereich 28b aufgesteckt. Anschließend wird eine Mutter 34 an den Bolzen 22 angeschraubt. Beim Verschrauben presst die Mutter 34 das Verbindungsteil 30 gegen das stirnseitige Ende 18b der Hülse 12.

Der Bolzen 22 ist bevorzugt aus einem härteren Material geformt als die Hülse 12. Dies führt dazu, dass die Mutter 34 mit einem höheren Anzugsmoment verschraubt werden kann, als wenn der Bolzen 22 aus dem Werkstoff der Hülse 12 geformt wäre. Die Hülse 12 ist insbesondere aus einem Kupferwerkstoff oder Aluminiumwerkstoff und der Bolzen 22 aus einem Stahlwerkstoff.

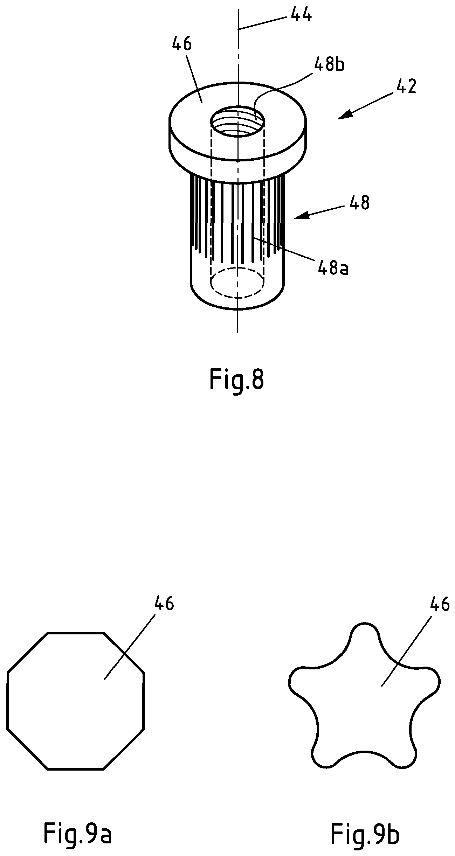

Fig. 8 zeigt einen Bolzen 42. Der Bolzen 42 hat eine Längsachse 44. Der Bolzen 42 hat einen Bolzenflansch 46 sowie einen Bolzenschaft 48. Der Bolzenschaft 48 erstreckt sich entlang der Längsachse 44. Der Bolzenschaft 48 kann an seiner äußeren Mantelfläche eine Rändelung 48a aufweisen. Der Bolzenschaft kann ein Loch 48b, insbesondere ein Durchgangsloch aufweisen. Der Bolzen 48 wird in die Durchgangsöffnung 16 eingeschoben. Der Bolzen 48 hat eine Längserstreckung die derjenigen der Durchgangsöffnung 16 entspricht derart, dass im eingeschobenen Zustand der Bolzen 48 stirnseitig auf der dem Rücksprung 20 gegenüberliegenden Seite bündig mit der Stirnfläche der Hülse 12 ist. In dem Loch 48b kann ein Innengewinde über zumindest Teile der Längserstreckung des Bolzens 48 vorgesehen sein. Das Innengewinde ist insbesondere in einem dem Bolzenflansch 46 abgewandten Bereich, kann sich jedoch auch bis an oder in den Bolzenflansch 46 hinein erstrecken.

Der Bolzenflansch 46 kann in seinem Querschnitt, wie er in den Fig. 9a und b dargestellt ist, einem Querschnitt des Rücksprungs 20 angepasst sein. So zeigt Fig. 9a einen Bolzenflansch 46 mit einem achteckigen Querschnitt, wohingegen Fig. 9b einen Bolzenflansch 46 mit einem sternförmigen Querschnitt zeigt. Diese und andere Querschnitte sind denkbar. Die Querschnitte von Bolzenflansch 46 und Rücksprung 20 können kongruent zueinander sein, so dass der Bolzenflansch 46 formschlüssig im Rücksprung 20 aufgenommen werden kann. Dieser Formschluss führt zu einer Verdrehsicherung des Bolzens 42 in der Durchgangsöffnung 16, so dass der Bolzen 42 an der Hülse 12 über das Innengewinde verschraubt werden kann.

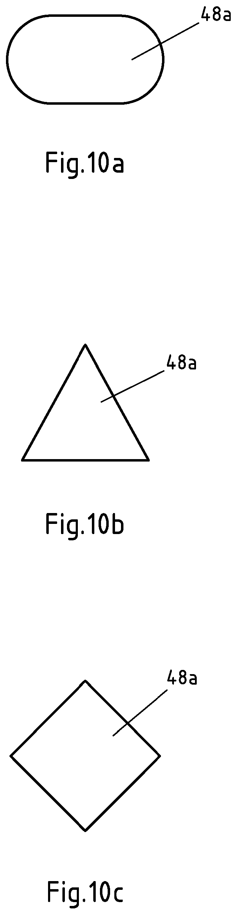

Neben verschiedenen Querschnitten des Bolzenflansches gemäß den Fig. 9a, b kann auch der Bolzenschaft 48, insbesondere im Bereich der Rändelung 48a ein Querschnitt aufweisen, der nicht kreisrund ist. So zeigt Fig. 10a einen Bolzenschaft 48 der oval ist. Fig. 10b zeigt einen Bolzenschaft 48 in einem Querschnitt der dreieckig ist und Fig. 10c zeigt einen entsprechenden viereckigen Querschnitt.

Die Durchgangsöffnung 16 als auch der Querschnitt des Bolzenschaftes 48 kann kongruent zueinander sein. Auch ist es möglich, dass die Rändelung 48a so ist, dass ihr maximaler Durchmesser etwas größer ist, als der Durchmesser der Durchgangsöffnung 16, so dass wenn der Bolzen 42 in die Durchgangsöffnung 16 geschoben wird, eine Presspassung zwischen dem Bolzen 46 und der Durchgangsöffnung 16 gebildet wird. Hierbei kann die Rändelung 48a zu einer plastischen Verformung der inneren Mantelfläche der Durchgangsöffnung 16 führen.

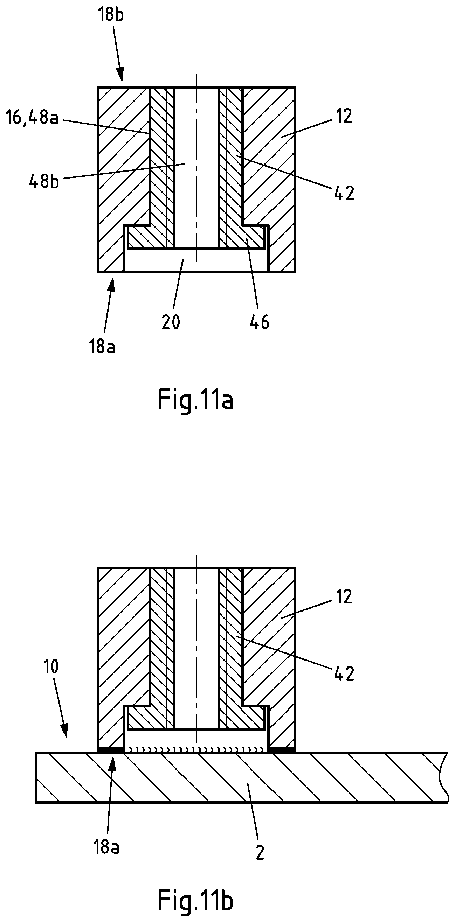

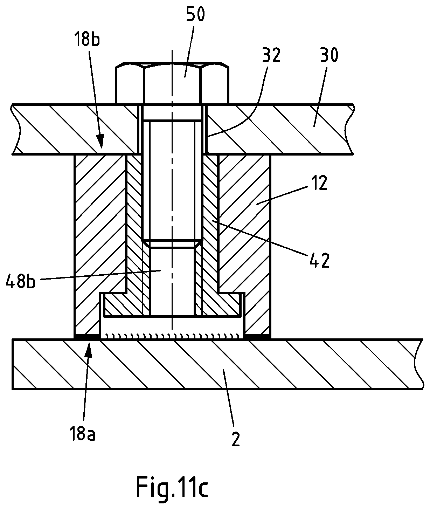

Die Fig. 11a-c zeigen das Herstellen einer gegenständlichen Verbindung. Zunächst (Fig. 11a) wird der Bolzen 42 in die Hülse 12 eingeschoben, so dass der Bolzenflansch 46 im Rücksprung 20 versenkt wird. Der Bolzenschaft 48 liegt innerhalb der Durchgangsöffnung 16. Der Bolzenschaft 48 hat eine Länge, die der Länge der Durchgangsöffnung entspricht. Dadurch liegt der Bolzenschaft 48 stirnseitig bündig an der äußeren Stirnfläche 18b der Hülse 12 an. Auch kann der Bolzenschaft 48 kürzer sein, so dass er hinter der Stirnfläche 18b der Hülse 12 zurückspringt.

Nachdem der Bolzen 42 in die Durchgangsöffnung 16 eingeschoben wurde , wird die Hülse 12 mit dem Anschlussteil 2 im Bereich des stirnseitigen Endes 18a stoffschlüssig verbunden, insbesondere verschweißt (Fig 11b). Hierbei kann ein Schweißwerkzeug die Hülse 12 mittels Reibschweißen gegen den Anschlussbereich 10 pressen und durch die eingebrachte Rotationsenergie ein Aufschmelzen der Fügepartner bewirken. Auch kann ein Widerstandsschweißen erfolgen.

Nachdem die Hülse 12 auf dem Anschlussteil 2 verschweißt wurde, kann ein Verbindungsteil 30, welches entsprechend einem hier beschriebenen Anschlussteil oder formabweichend hiervon geformt sein kann, an dem Bolzen 42 befestigt, insbesondere verschraubt werden. Das Verbindungsteil 30 ist insbesondere ein Kabel, insbesondere wie es in den Fig. 1a-d beschrieben ist.

Das Verbindungsteil 30 hat eine Durchgangsöffnung 32. Mit der Durchgangsöffnung 32 wird das Verbindungsteil 30 so an dem Bolzen 42 und der Hülse 12 ausgerichtet, dass die Durchgangsöffnung 32 mit dem Loch 48b fluchtet. Anschließend wird eine Schraube 50 mit dem Innengewinde in dem Loch 48b des Bolzens 42 verschraubt. Beim Verschrauben presst die Schraube 50 das Verbindungsteil 30 gegen das stirnseitige Ende 18b der Hülse 12.

Der Bolzen 42 ist bevorzugt aus einem härteren Material geformt als die Hülse 12. Dies führt dazu, dass die Schraube 50 mit einem höheren Anzugsmoment verschraubt werden kann, als wenn der Bolzen 42 aus dem Werkstoff der Hülse 12 geformt wäre. Die Hülse 12 ist insbesondere aus einem Kupferwerkstoff oder Aluminiumwerkstoff und der Bolzen 42 aus einem Stahlwerkstoff.

Eine elektrische Verbindung zwischen dem Verbindungsteil 30 und dem Anschlussteil 2 erfolgt insbesondere über die Hülse 12. Der Bolzen 22 dient bevorzugt der mechanischen Fixierung des Verbindungsteils 30 an der Hülse 12, welche ihrerseits wiederum im Bereich des stirnseitigen Endes 18a stoffschlüssig mit dem Anschlussteil 2 gefügt ist.

### Bezugszeichenliste

- 2: Anschlussteil
- 4: Längsachse
- 6: Hochachse
- 8: Querachse
- 10: Anschlussbereich
- 12: Hülse
- 14: Längsachse
- 16: Durchgangsöffnung
- 18a, b: stirnseitiges Ende
- 20: Rücksprung
- 22, 42: Bolzen
- 24, 44: Längsachse
- 26, 46: Bolzenkopf
- 28, 48: Bolzenschaft
- 28a, b: Bereich
- 48a: Rändelung
- 48b: Loch mit Gewinde
- 30: Verbindungsteil
- 32: Durchgangsöffnung
- 34: Mutter
- 50: Schraube

## Patentansprüche

1. Verbindung umfassend,
- ein Anschlussteil (2),
- eine mit dem Anschlussteil (2) stoffschlüssig verbundene, eine in Längsrichtung verlaufende Durchgangsöffnung (16) aufweisende Hülse (12) und
- einen mit der Hülse (12) verbundenen einen Bolzenschaft (48) und einen Bolzenflansch (46) aufweisenden Bolzen (42) wobei
- der Bolzen (42) mit seinem Bolzenschaft (48) in Längsrichtung in der Durchgangsöffnung (16) der Hülse (12) verpresst ist,
- der Bolzen (42) mit seinem Bolzenflansch (46) in einem an einem stirnseitigen Ende (18a, b) der Hülse (12) angeordneten Rücksprung (20) angeordnet ist, wobei
- die Hülse (2) mit ihrer an dem stirnseitigen Ende (18a) liegenden Stirnfläche stoffschlüssig mit dem Anschlussteil (2) verbunden ist, **dadurch gekennzeichnet,**
- **dass** der Bolzenschafts (48) ein sich in Längsrichtung des der Bolzenschafts (48) erstreckendes Loch (48b) aufweist.

2. Verbindung nach Anspruch 1,
**dadurch gekennzeichnet,**
- **dass** der Bolzen (42) mit seinem kragenförmig, radial nach außen auskragenden Bolzenflansch zumindest teilweise umlaufend an einer umlaufenden Schulter in dem Rücksprung (20) der Hülse (2) gelagert ist.

3. Verbindung nach Anspruch 1 oder 2,
**dadurch gekennzeichnet,**
- **dass** der an dem stirnseitigen Ende (18a, b) der Hülse (2) angeordnete Rücksprung (20) die Durchgangsöffnung (16) der Hülse (2) umschließt.

4. Verbindung nach einem der vorangehenden Ansprüche,
**dadurch gekennzeichnet,**
- **dass** sich das Loch in Längsrichtung des Bolzens (42) zwischen zwei stirnseitigen Enden (18a, b) des Bolzens (42) erstreckt oder
- **dass** sich das Loch als Sackloch oder Durchgangsloch in Längsrichtung des Bolzens (42) zwischen zwei stirnseitigen Enden (18a, b) des Bolzens (42) erstreckt.

5. Verbindung nach einem der vorangehenden Ansprüche,
**dadurch gekennzeichnet,**
- **dass** das Loch ein Innengewinde aufweist oder,
- **dass** das Loch ein Innengewinde aufweist und dass das Innengewinde sich nur teilweise über die Längserstreckung des Bolzens (42) erstreckt.

6. Verbindung nach einem der vorangehenden Ansprüche,
**dadurch gekennzeichnet,**
- **dass** der Bolzenschaft (48) an seiner äußeren Mantelfläche zumindest abschnittsweise gerändelt ist und der gerändelte Teil in Presspassung in der Durchgangsöffnung (16) eingepresst ist, oder
- **dass** der Bolzenschaft (48) an seiner äußeren Mantelfläche in einem am Bolzenflansch angrenzenden Bereich (28a, b) zumindest abschnittsweise gerändelt ist und der gerändelte Teil in Presspassung in der Durchgangsöffnung (16) eingepresst ist.

7. Verbindung nach einem der vorangehenden Ansprüche,
**dadurch gekennzeichnet,**
- **dass** der Bolzen (42) verdrehsicher in der Durchgangsöffnung (16) eingepresst ist.

8. Verbindung nach einem der vorangehenden Ansprüche,
**dadurch gekennzeichnet,**
- **dass** der Bolzenflansch in Längsrichtung mit einem Abstand zu der Stirnfläche in dem Rücksprung (20) angeordnet ist.

9. Verbindung nach einem der vorangehenden Ansprüche,
**dadurch gekennzeichnet,**
- **dass** die Hülse (12) aus einem Kupferwerkstoff gebildet ist und/oder dass der Bolzen (42) aus Stahl gebildet ist.

10. Verbindung nach einem der vorangehenden Ansprüche,
**dadurch gekennzeichnet,**
- **dass** die Hülse (12) mit der an dem stirnseitigen Ende (18a, b) liegenden Stirnfläche mit dem Anschlussteil (2) reibverschweißt ist, oder
- **dass** die Hülse (12) mit der an dem stirnseitigen Ende (18a, b) liegenden Stirnfläche mit dem Anschlussteil (2) vollflächig reibverschweißt ist, oder
- **dass** die Hülse (12) mit der an dem stirnseitigen Ende (18a, b) liegenden Stirnfläche mit dem Anschlussteil (2) vollflächig rotationsreibverschweißt ist.

11. Verbindung nach einem der vorangehenden Ansprüche,
**dadurch gekennzeichnet,**
- **dass** ein Verbindungsteil (30) mit einer Öffnung über das Loch des Bolzens (42) gelegt ist und mit einer Schraube (50) über das Gewinde in dem Loch des Bolzens (42) an der Hülse (12) verklemmt ist, so dass das Verbindungsteil (30) mit dem zum Rücksprung (20) distalen Ende der Hülse (12) unmittelbar in Kontakt ist.

12. Verbindung nach einem der vorangehenden Ansprüche,
**dadurch gekennzeichnet,**
- **dass** das Anschlussteil (2), die Hülse (12), der Bolzen (42) und das Verbindungsteil (30) in einem gemeinsamen Gehäuse gekapselt sind, wobei das Anschlussteil (2) und das Verbindungsteil (30) feuchtigkeitsdicht aus dem Gehäuse heraus geführt sind.

## Claims

1. Connection comprising,
- a connecting part (2),
- a sleeve (12) materially bonded to the connecting part (2) and having a through-opening (16) extending in a longitudinal direction, and
- bolt connected to the sleeve (12) and having a bolt shank (48) and a bolt flange (46), wherein
- the bolt (42) is press-fitted with its bolt shank (48) in the longitudinal direction in the through-opening (16) of the sleeve (12)
- the bolt (42) is arranged with its bolt flange (46) in a recess (20) arranged at a front face end (18a, b) of the sleeve (12), wherein
- the sleeve (2) is materially bonded to the connecting part (2) with its front face located at the front face end (18a),
**characterized in**
- **that** the bolt shank (48) has a hole extending (48b) in the longitudinal direction of the bolt shank (48).

2. Connection according to claim 1,
**characterized in**
- **that** the bolt (42) with its collar-shaped, radially outwardly projecting bolt flange is mounted at least partially circumferentially on a circumferential shoulder in the recess (20) of the sleeve (2).

3. Connection according to claim 1 or 2,
**characterized in**
- **that** the recess (20) arranged at the front face end (18a, b) of the sleeve (2) encloses the through-opening (16) of the sleeve (2).

4. Connection according to one of the preceding claims,
**characterized in**
- **that** the hole extends in the longitudinal direction of the bolt (42) between two front face ends (18a, b) of the bolt (42) or
- **that** the hole extends as a blind hole or through hole in the longitudinal direction of the bolt (42) between two end faces (18a, b) of the bolt (42)

5. Connection according to one of the preceding claims,
**characterized in**
- **that** the hole has an internal thread or
- **that** the hole has an internal thread and that the internal thread extends only partially over the longitudinal extent of the bolt (42).

6. Connection according to one of the preceding claims,
**characterized in**
- **that** the bolt shank (48) is knurled at least in sections on its outer lateral surface and the knurled part is press-fitted into the through-opening (16), or
- **that** the bolt shank (48) is knurled at least in sections on its outer surface in an area (28a, b) adjacent to the bolt flange, and the knurled part is pressed into the through-opening (16) with a press fit.

7. Connection according to one of the preceding claims,
**characterized in**
- **that** the bolt (42) is pressed into the through-opening (16) in a non-rotatable manner.

8. Connection according to one of the preceding claims,
**characterized in**
- **that** the bolt flange is arranged in the recess (20) in the longitudinal direction at a distance from the front face.

9. Connection according to one of the preceding claims,
**characterized in**
- the sleeve (12) is formed of a copper material and/or that the bolt (42) is formed of steel.

10. Connection according to one of the preceding claims,
**characterized in**
- **that** the sleeve (12) is friction-welded to the connecting part (2) with the front face located at the front face end (18a, b) or
- **that** the sleeve (12) is friction-welded over its entire surface to the connecting part (2) with the end face located at the front end (18a, b), or
- **that** the sleeve (12) is friction welded over its entire surface by rotational friction welding, to the connecting part (2) with the end face located at the front end (18a, b).

11. Connection according to one of the preceding claims,
**characterized in**
- **that** a connection part (30) with an opening is placed over the hole of the bolt (42) and is clamped to the sleeve (12) by a screw (50) via the thread in the hole of the bolt (42), so that the connection part (30) is in direct contact with the end of the sleeve (12) distal to the recess (20).

12. Connection according to one of the preceding claims,
**characterized in**
- **that** the connecting part (2), the sleeve (12), the bolt (42) and the connection part (30) are encapsulated in a common housing, the connecting part (2) and the connection part (30) being guided out of the housing in a moisture-tight manner.

## Revendications

1. Raccord comprenant
- une pièce de raccord (2),
- une douille (12) reliée par liaison de matière à la pièce de raccord (2) et comportant une ouverture de passage (16) s'étendant dans une direction longitudinale (4), et
- un boulon (42) relié à la douille (12) et ayant une tige de boulon (48) et une bride de boulon (46), où
- le boulon (42) est enfoncé avec sa tige de boulon (48) dans la direction longitudinale (4) dans l'ouverture de passage (16) de la douille (12),
- le boulon (42) est disposé avec sa bride de boulon (46) dans un évidement (14) situé à une extrémité (18a,b) de la douille (12), où
la douille (12) est reliée par liaison de matière avec la pièce de raccord (2) par sa surface frontale (18a) située à l'extrémité avant,
**caractérisé en ce**
- **que** la tige du boulon (48) a un trou (48b) s'étendant dans le sens longitudinal de la tige du boulon (48).

2. Raccord selon la revendication 1,
**caractérisé en ce**
- **que** le boulon (42) est soutenu avec sa bride de boulon (46) au moins partiellement sur son pourtour par un épaulement périphérique dans l'évidement de la douille (12) en forme de collerette saillant radialement vers l'extérieur.

3. Raccord selon la revendication 1 ou 2,
**caractérisé en ce**
- **que** l'évidement disposé à l'extrémité avant (18a, b) de la douille (12) entoure l'ouverture de passage (16) de la douille (12).

4. Raccord selon l'une des revendications précédentes,
**caractérisé en ce**
- **que** le trou s'étend dans le sens longitudinal du boulon (42) entre deux extrémités frontales (18a, b) du boulon (42), ou
- **que** le trou s'étend sous forme de trou borgne ou de trou traversant dans le sens longitudinal du boulon (42) entre deux extrémités frontales (18a, b) du boulon (42).

5. Raccord selon l'une des revendications précédentes,
**caractérisé en ce**
- **que** le trou a un filetage intérieur ou,
- **que** le trou a un filetage intérieur et le filetage intérieur ne s'étend que partiellement sur la longueur du boulon (42).

6. Raccord selon l'une des revendications précédentes,
**caractérisé en ce**
- **que** la tige du boulon (48) est moletée au moins par sections et que la partie moletée est enfoncée dans l'ouverture de passage (16) par ajustement serré, ou
- **que** la tige du boulon (48) est moletée au moins par sections sur sa surface extérieure dans une zone (28a, b) adjacente à la bride du boulon et que la partie moletée est enfoncée dans l'ouverture traversante (16) par ajustement serré.

7. Raccord selon l'une des revendications précédentes,
**caractérisé en ce**
- **que** le boulon (42) est enfoncé dans l'ouverture de passage (16) de manière intournable.

8. Raccord selon l'une des revendications précédentes,
**caractérisé en ce**
- **que** la bride de boulon est disposée dans le sens longitudinal à distance de la face frontale dans l'évidement (20).

9. Raccord selon l'une des revendications précédentes,
**caractérisé en ce**
- la douille (12) est formé en cuivre et/ou le boulon (42) est formé en acier.

10. Raccord selon l'une des revendications précédentes,
**caractérisé en ce**
**que** la douille (12) est soudée à la pièce de raccord par soudage par friction avec la face frontale à l'extrémité avant, ou
- **que** la douille (12) est soudé par friction sur toute sa surface avec la pièce de raccorde (2) au niveau de la face frontale située à l'extrémité frontale (18a, b), ou
- **que** la douille (12) est soudée par friction sur toute sa surface, par friction rotative,
avec la pièce de raccord (2) au niveau de la surface frontale située à l'extrémité frontale (18a, b).

11. Raccord selon l'une des revendications précédentes,
**caractérisé en ce**
- **qu'**une pièce de liaison (30) est placée avec une ouverture sur le trou du boulon (42) et est bloquée avec une vis (50) sur le filetage dans le trou du boulon (42) sur la douille (12), de sorte que la pièce de liaison (30) est en contact direct avec l'extrémité distale de la douille (12) par rapport à l'évidement (20).

12. Raccord selon l'une des revendications précédentes,
**caractérisé en ce**
- **que** la pièce de raccordement (2), la douille (12), le boulon (42) et la pièce de liaison (30) sont encapsulés dans un boîtier commun, où la pièce de raccord (2) et la pièce de liaison (30) sortent du boîtier de manière étanche à l'humidité.
